Europäisches Patentamt

European Patent Office

Office européen des brevets

(11) Publication number: **0 241 629**
**A2**

## (12) EUROPEAN PATENT APPLICATION

(21) Application number: 86830283.7

(22) Date of filing: 03.10.86

(51) Int. Cl.4: **F16K 3/18**

(30) Priority: 17.04.86 IT 2011386

(43) Date of publication of application:
21.10.87 Bulletin 87/43

(84) Designated Contracting States:
AT BE CH DE FR GB LI NL SE

(71) Applicant: **NOVATEC S.r.l.**
**Via Cassoni, 14**
**I-20141 Milano(IT)**

(72) Inventor: **Chiuppi, Rolando NOVATEC S.r.l.**
**Via Cassoni, 14**
**I-20141 Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **A gate valve with improved sealing.**

(57) A gate valve with improved sealing has a valve shutter (3) formed as a shutter body (3) carrying two shutter plates (5) facing away from one another and each carrying a toroidal seal (12) on its outwardly directed face. The plates (5) have inwardly directed axial telescopic sleeves and are urged towards one another by a spring (6) and can be moved apart, against the action of the spring (6) by means of a drum (7) positioned between the plates (5) and carrying captive balls (13) which contact co-operating inclined planes on the facing surfaces of the plates (5). Rotation of the drum (7) to cause separation of the plates (5) is effected by means of a linkage including a resiliently biased plunger rod (17) and a cranked link (8) which are moved with respect to the valve body (3) by continued movement of the valve operating member after the valve body (3) has reached its fully closed position so that, upon closure of the valve the plates (3) are forced apart to press the toroidal seals tightly against the valve seats.

Fig.1

# A GATE VALVE WITH IMPROVED SEALING

The present invention relates to a gate valve with improved sealing which, when closed, can sealingly intercept and completely separate, ducts positioned upstream and downstream of the valve and connected thereto.

Conventional gate valves are usually provided with a shutter having parallel or inclined opposite faces, which can be introduced between facing valve seats formed upstream and downstream of the valve shutter position in a valve chamber. Movement of the shutter or gate is effected by means of an operating screw threadedly engaged in the housing. This known construction obviously requires very accurate and close tolerance machining to ensure an adequate seal between the valve shutter gate and the valve body, and this consequently leads to relatively high costs.

Moreover, such known gate valves, since they cannot incorporate separate, easily interchangeable seals, are of low reliability and often require frequent maintenance operations and/or adjustments.

The technical problem which the present invention seeks to solve is that of eliminating the above-described disadvantages, by providing a gate valve which is able to guarantee a perfect seal on both sides.

According to the present invention, therefore, there is provided a gate valve comprising a valve body within which a valve shutter is slidable transversely of the axis of a passage through the valve body characterised in that the valve shutter comprises a valve shutter body on which are carried two parallel valve shutter plates each carrying a toroidal seal, the shutter plates being urged by resilient biasing means towards one another and being displaceable with respect to one another parallel to the axis of the passage through the valve body against the action of the said resilient biasing means whereby to press the said toroidal seals into sealing contact with the valve seats of the valve body, and in that the relative displacement of the valve shutter plates parallel to the axis of the passage through the valve body is achieved by means of a partial rotation of a drum positioned between the said two valve shutter plates and having means for engaging inclined planes on the facing surfaces of the valve shutter plates such that turning movement of the drum in one direction or the other with respect to the valve shutter body and the valve shutter plates causes relative separation or approach of the two valve shutter plates.

A particular advantage of the present invention is that it provides a gate valve which is provided with a shutter device carrying easily replaceable sealing members.

Another advantage of the present invention is that it provides a gate valve which is constructionally simple and of high reliability.

One embodiment of the present invention will now be more particularly described, by way of example, with reference to the accompanying drawings, in which:

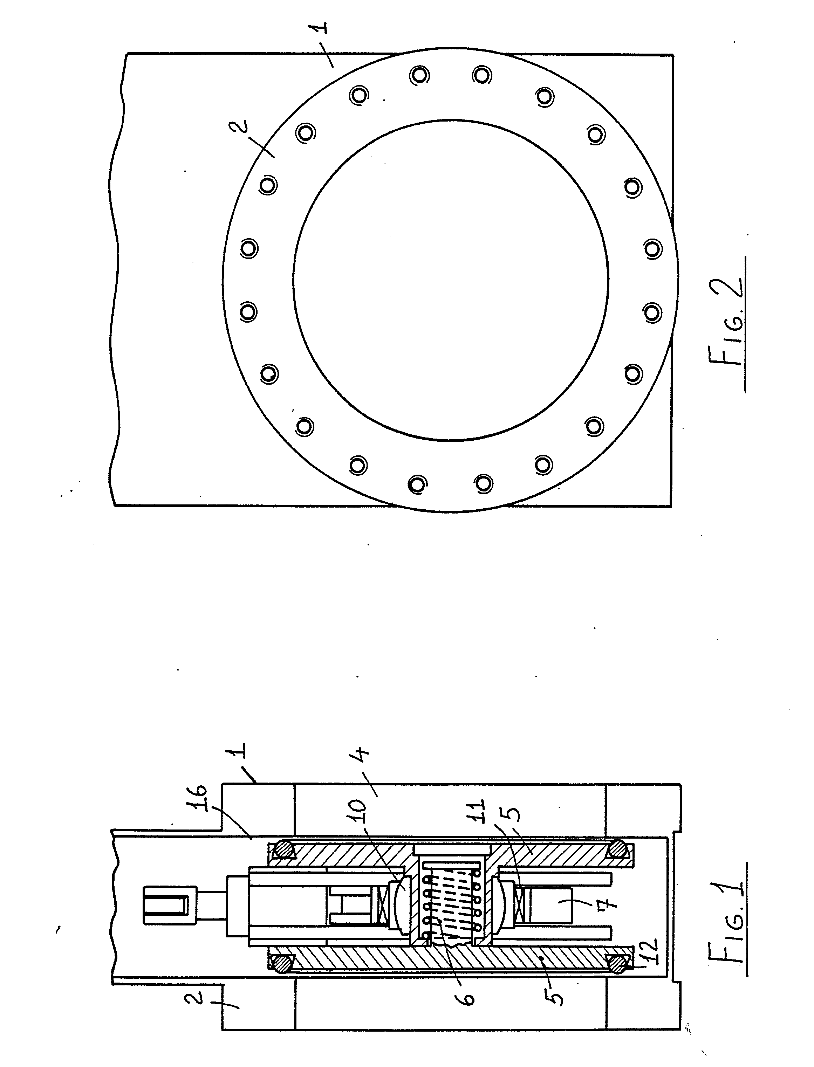

Figure 1 is a transverse axial section of a gate valve formed as an embodiment of the invention;

Figure 2 is a side view of the gate valve of Figure 1;

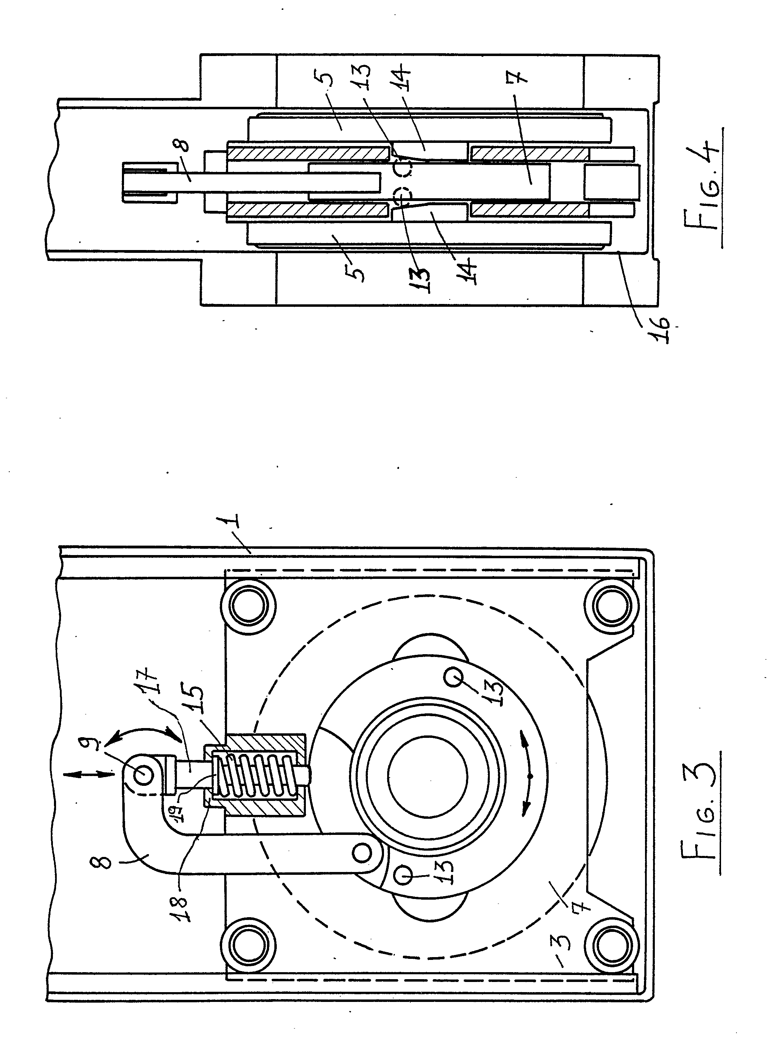

Figure 3 is a vertical section through the gate valve of Figure 1; and

Figure 4 is a second transverse section of the gate valve of the invention, showing a pair of inclined planes fitted on the shutter plates.

With reference now to the accompanying drawings, the gate valve shown comprises a body 1, provided with counterposed coaxial flanges 2. Within the body 1 slides a shutter body 3 movable transversely of the axis of the passage 4 through the valve body 1. The movement of the valve shutter body 3 is effected by a control mechanism (not shown) acting on a connector 9 which will be described in more detail below.

The valve shutter body 3 carries two coaxial shutter plates 5 movable towards and away from one another, and which during transverse translation of the said shutter body 3, and when the valve is open, are held in their positions of closest approach by a biasing spring 6.

The separation of the said shutter plates 5 is con trolled by means of a drum 7 which can turn about an axis which coincides with that of the plates 5 themselves. This drum is mounted between the plates and is turned by a cranked link 8 which mechanically is equivalent to a crank and connecting rod system capable of transforming a small rectilinear movement into a small angular rotation.

The connector 9 by which the valve shutter body 3 is connected to the valve shutter position control member (not illustrated) is also connected to one end of the cranked link 8 of the mechanical body for causing separation of the said valve shutter plates 5. These latter, in particular, are mounted on a ball joint 10 secured by a roller cage 11 and carry, at the perimeter of their outwardly directed faces, respective toroidal sealing rings 12 which, when the plates 5 are forced apart in the closed position of the valve shutter body, press on the facing valve seats to achieve a secure fluid-tight seal.

In opposite faces thereof the drum 7 is provided with at least two pairs of balls 13 captive in seats formed in its lateral faces: these balls are engageable with co-operating inclined planes 14 fixed in corresponding positions on the said shutter plates 5 of the valve shutter body 3. In the open position of the valve shutter the balls 13 contact only that part of associated inclined plane surface furthest from the median plane of the shutter body 3. As the drum 7 is turned, however, (in a manner which will be described below) the balls 13 move along the corresponding inclined planes and since the balls 13 are captive and cannot move inwardly, the inclined planes 14, and therefore the valve shutter plates 5 are forced to move apart against the action of the spring 6.

In practice, the oppositely directed displacement of the valve shutter plates 5 can take place only when the valve body 3 of which they form part is located in the valve closed position obstructing the passage passing through the valve body.

In fact, in use, when the valve body 3 has reached its end of stroke position upon closure, the position control member continues to move for a further short distance, which is possible because the connector 9 is carried at the end of a plunger rod 17, which is guided in a housing 18, in which it is retained by a collar 19 and biased by a spring 15 which is thus compressed by this further movement off the connector 9. This movement of the plunger rod 17 is transmitted, via the cranked link 8, to the drum 7 causing it to turn through a small angle to displace the balls 13 along the corresponding inclined planes 14.

Consequently, the balls 13 act on the inclined planes 14 causing the plates 5 to be pressed outwardly away from one another pressing the sealing rings 12 into contact with the valve seats.

It is appropriate at this point to emphasise that because the valve plates 5 are mounted on a ball joint they can position themselves automatically, so as to be perfectly co-planar with the associated valve seats, thus ensuring a perfect bi-lateral seal.

Moreover, upon opening the valve, the biasing springs 6 and 15 which are compressed upon closure of the valve, release stored energy, the valve body thus remains in the closed position until the two valve shutter plates 5 have been dawn together thereby disengaging the associated sealing rings 12 from the associated valve seats 16 before the valve-opening displacement of the valve shutter body 3 commences.

## Claims

1. A gate valve comprising a valve body (1) within which a valve shutter (3) is slidable transversely of the axis of a passage (4) through the valve body (1)characterised in that the valve shutter comprises a valve shutter body (3) on which are carried two parallel valve shutter plates (5) each carrying a toroidal seal (12), the shutter plates (5) being urged by resilient biasing means (6) towards one another and being displaceable with respect to one another parallel to the axis of the passage (4) through the valve body (1) against the action of the said resilient biasing means (6) whereby to press the said toroidal seals (12) into sealing contact with the valve seats (16) of the valve body (1), and in that the relative displacement of the valve shutter plates (5) parallel to the ¯axis of the passage (4) through the valve body (1) is achieved by means of a partial rotation of a drum (7) positioned between the said two valve shutter plates (5) and having means (13) for engaging inclined planes (14) on the facing surfaces of the valve shutter plates such that turning movement of the drum in one direction or the other with respect to the valve shutter body (3) and the valve shutter plates (5) causes relative separation or approach of the two valve shutter plates (5).

2. A gate valve according to Claim 1, characterised in that the said means (13) for engaging the said inclined planes (14) are pairs of balls (13) captive in seats on opposite faces of the drum (7) and engaging the said inclined planes (14).

3. A gate valve according to Claim 1, characterised in that the said two valve shutter plates (5) are mounted on the valve shutter body (3) translatable transversely of the axis of the passage (4) through the valve body, and in that the said valve shutter body (3) is linked to the control member for effecting such transverse displacement by a resiliently biased linkage (15,17,18,19) allowing the said control member to perform a further short movement after the said valve shutter body (3) has reached the fully closed position.

4. A gate valve according to Claim 2, characterised in that the said resilient linkage includes a plunger rod (17) biased to an extended position by a spring (15) and a cranked lever (8) interconnecting the said drum (7) and the end (9) of plunger rod (17) to which the said valve shutter position control member is connected such that upon arrival of the valve body (3) at the closure position the plunger rod (17) is depressed against the action of the spring (15) by the said further movement of the valve shutter position control member and the drum (7) is turned through a small angle by the cranked link (8).

5. A gate valve according to any of Claims 1 to 3 characterised in that the said two valve shutter plates (5) are connected by a ball joint (10) to the said valve shutter body (3).

Fig. 2

Fig. 1

Fig.4

Fig.3